# EUROPÄISCHE PATENTANMELDUNG

(11) **EP 1 433 937 A1**
(43) Veröffentlichungstag der Anmeldung: **30.06.2004**
(21) Anmeldenummer: 02028698.5
(22) Anmeldetag: 23.12.2002
(51) Int. Cl.: F02B 37/18, F02B 37/24, F01D 17/16, F02C 9/18, F01D 17/10

(54) **Abgasturbolader mit einer in das Gehäuse integrierten Bypasseinrichtung und Herstellungsverfahren für diese Bypasseinrichtung**

(71) Anmelder: BorgWarner Inc., Auburn Hills, MI 48236-1782 (US)
(72) Erfinder: Jaisle, Jens Wolf, 70597 Stuttgart (DE); Rodenhaeuser, Helmut, 64372 Ober-Ramstadt (DE); Gemming, Werner, 67273 Weisenheim (DE)
(74) Vertreter: Patentanwälte Westphal, Mussgnug & Partner

(57) **Zusammenfassung**

Die Erfindung betrifft einen Abgasturbolader für eine Brennkraftmaschine, mit einem Gehäuse, mit mindestens einer Turbine, die in dem Gehäuse angeordnet ist und die eine variable Turbinengeometrie zur Regelung des Ladeluftdruckes aufweist, mit einer Bypasseinrichtung für den Abgasstrom zur zumindest teilweisen Überbrückung der Turbine, wobei die Bypasseinrichtung in das Gehäuse, insbesondere in eine Wand des Gehäuses, integriert ist. Die Erfindung betrifft ferner ein Verfahren zur Herstellung einer Bypassbohrung mit Verschließeinrichtung und Verstelleinrichtung für einen solchen.

## Beschreibung

Die Erfindung betrifft einen Abgasturbolader für eine Brennkraftmaschine der im Oberbegriff des Patentanspruchs 1 genannten Art sowie ein Verfahren zur Herstellung einer Bypassbohrung mit Verschließeinrichtung und Verstelleinrichtung für einen solchen Abgasturboladers.

Ein Abgasturbolader ist ein Aufladesystem für eine Brennkraftmaschine, mittels der die Zylinder der Brennkraftmaschine mit einem erhöhten Ladeluftdruck beaufschlagt werden. Ein solcher Abgasturbolader kann einstufig, zwei- oder mehrstufig ausgebildet sein. Eine jeweilige Stufe des Abgasturboladers besteht aus einem Verdichter, der ladeluftseitig dem Einlass der Brennkraftmaschine vorgeschaltet angeordnet ist, und einer Turbine, die abgasseitig dem Motorauslass nachgeschaltet angeordnet ist. Turbine und Verdichter sind miteinander über eine gemeinsame Welle gekoppelt. Der detaillierte Aufbau und die Funktionsweise eines solchen Abgasturboladers ist vielfach bekannt und wird daher nicht näher erläutert.

An die Betriebsweise von mit Abgasturboladern ausgestatteten Antriebseinheiten für Brennkraftmaschinen werden die gleichen hohen Anforderungen gestellt wie an leistungsgleiche herkömmliche Brennkraftmaschinen, beispielsweise Saugmotoren. Daher muss zur Erreichung einer geforderten Motorleistung der volle Ladeluftdruck des Abgasturboladers bereits bei sehr niedrigen Motordrehzahlen zur Verfügung stehen. Um dieser Anforderung gerecht zu werden, wird das Gehäuse des Turboladers typischerweise unterdimensioniert, so dass das Gehäuse kleiner als erforderlich ausgebildet ist, um dadurch ein besseres Ansprechen der Turbine bei geringen Drehzahlen zu erhalten. Seine Größe reicht aber bei mittleren und hohen Drehzahlen meist mehr aus, die für eine bestimmte Motorleistung benötigte Luftmenge bereitzustellen.

Eine ausreichende Motorleistung sowohl bei niedrigen als auch bei hohen Drehzahlen des Abgasturboladers ist nur in Verbindung mit einer (turbinenseitigen) Regelung des Ladeluftdruckes erzielbar. Es existieren bislang zwei unterschiedliche Ansätze zur Regelung des Ladedruckes:

Die einfachste Form der Ladedruckregelung ist die Bereitstellung eines turbinenseitigen Bypasses. Die Turbine des Abgasturboladers wird hier so klein gewählt, dass die Anforderungen an das Drehmomentverhalten bei niedrigen Drehzahlen erfüllt werden und eine gute Betriebsweise des Motors, d.h. ein schnelles Ansprechen, erreicht wird. Nach dem Erreichen des maximal zulässigen Ladedruckes wird ein Teil der Abgasmenge über eine eigens dafür vorgesehene Bypassleitung um die Turbine herum abgeleitet. Ab einer bestimmten Motordrehzahl steigt somit der Ladedruck nicht mehr an. Die Funktion des Bypasses kann selbstregelnd oder extern gesteuert durch eine Motorsteuerung erfolgen. Die Aufteilung der Abgasmenge über die Turbine bzw. den Bypass erfolgt meist über Ventile, Schieber, oder dergleichen.

Die Regelung des Ladeluftdruckes über eine abgasseitige Bypassrohrleitung ist beispielsweise in der JP 63 297 731 A, die Regelung über ein sogenanntes "Waste-Gate" in der DE 196 18 311 A1, der JP 04 054 223 A und der US 5,943,864 ausführlich beschrieben worden.

Moderne Abgasturbolader weisen zunehmend eine verstellbare, variable Turbinengeometrie (VTG) zur Regelung des Ladeluftdruckes auf. Die verstellbare Turbinengeometrie ermöglicht es, den Strömungseintrittsquerschnitt der Turbine in Abhängigkeit vom Motorbetriebspunkt zu verstellen. Dadurch wird die gesamte Abgasenergie genutzt, und der Strömungseintrittsquerschnitt der Turbine kann für jeden Betriebspunkt optimal eingestellt werden, so dass gegenüber der vorher genannten Bypassregelung der Wirkungsgrad des Turboladers und damit der des Motors verbessert wird. Die fortwährende Anpassung des Strömungseintrittsquerschnitts an den jeweiligen Betriebszustand des Motors bewirkt eine Reduzierung des Verbrauchs und der Emissionen. Das bereits bei niedrigen Drehzahlen hohe Drehmoment des Motors und eine sorgfältig abgestimmte Regelungsstrategie bewirken außerdem eine spürbare Verbesserung des dynamischen Fahrverhaltens.

Zum allgemeinen Hintergrund von Abgasturboladern mit VTG-Turbine wird auf die Druckschriften DE-PS 34 27 715, DE 43 30 487 C1, DE 100 29 640 C2, DE 100 48 105 A1, DE 35 41 508 C1, DE 196 15 237 C2, DE 199 05 637 C1, DE 199 51 592 A1, DE 195 43 190 C2, DE 198 44 571 C2 und DE 199 61 610 A1 verwiesen.

Bei modernen Dieselbrennkraftmaschinen mit variabler Turbinengeometrie (VTG) lässt sich mit der genannten VTG-Regelung über den gesamten Drehzahlbereich lediglich über die jeweilige Stellung der Schaufeln des Leitgitters der Ladeluftdruck regeln. Weitere Maßnahmen zur Ladeluftregelung sind daher hier nicht erforderlich.

Anders ist die Situation beispielsweise bei einem mit einer variablen Turbinengeometrie ausgestatteten Ottomotor. Hier ist das Drehzahlspektrum und damit auch das Ladeluftspektrum im Vergleich zu einem Dieselmotor deutlich breiter. Eine Regelung des Ladeluftdruckes über den gesamten Bereich des Drehzahlspektrums ist damit ohne zusätzliche Maßnahmen aber nicht mehr möglich.

Zu diesem Zwecke wird insbesondere bei Ottomotoren mit variabler Turbinengeometrie zusätzlich ein turbinenseitiger Bypass bereitgestellt, der das Abgas ab Erreichen des maximalen Ladedrucks über eine externe Bypassleitung abführt. Die Bereitstellung eines Bypasses bei einem VTG-Abgasturbolader ist beispielsweise in der DE 199 05 637 C1, der DE 198 43 026 und der DE 196 18 311 A1 beschrieben.

Im Motorraum heutiger Kraftfahrzeuge steht jedoch ein immer geringerer Platz zur Verfügung, so dass der Bedarf an immer kompakteren Brennkraftmaschinen und Abgasturboladern besteht. Das separate Bereitstellen eines externen Bypasses für eine VTG-Turbine benötigt aber zusätzlichen Platz im Motorraum, was es aber eben zu vermeiden gilt.

Darüber hinaus ist das Bereitstellen eines separaten Bypasses auch aufgrund des dafür erforderlichen zusätzlichen Montageschrittes relativ aufwendig und damit teuer.

Ein weiterer Nachteil eines separaten Bypasses ist der Umstand, dass die Turbinenleitschaufeln und der Bypass nicht, bzw. nur unter Einsatz einer sehr aufwendigen Mechanik, gleichzeitig geregelt werden können. Der Einsatz einer solchen Mechanik verbietet sich allerdings aus Kostengründen.

Ausgehend von dem genannten Stand der Technik liegt der vorliegenden Erfindung die Aufgabe zugrunde, einen konstruktiv verbesserten Abgasturbolader zu schaffen, der insbesondere kompakter im Aufbau ist und der insbesondere eine vereinfachte Regelung des Ladeluftdruckes aufweist.

Die Turbolader bezogene Aufgabe wird erfindungsgemäß durch einen Abgasturbolader mit den Merkmalen des Patentanspruchs 1 gelöst.

Demgemäß ist ein Abgasturbolader für eine Brennkraftmaschine vorgesehen, mit einem Gehäuse, mit mindestens einer Turbine, die in dem Gehäuse angeordnet ist und die eine variable Turbinengeometrie zur Regelung des Ladeluftdruckes aufweist, mit einer Bypasseinrichtung für den Abgasstrom zur zumindest teilweisen Überbrückung der Turbine, wobei die Bypasseinrichtung in das Gehäuse integriert ist.

Die der Erfindung zugrunde liegende Idee besteht darin, einen VTG-Turbolader mit verstellbarem Bypass bereitzustellen, bei dem der Bypass im Turbinengehäuse integriert ist. Es handelt sich dabei nicht um ein an sich bekanntes "Waste-Gate", sondern vielmehr ist der Bypass gesondert und vollständig im Material des Gehäuses, insbesondere in der Wand des Turbinengehäuses, integriert. Es ist damit vorteilhafterweise kein zusätzlicher Gehäuseraum erforderlich, da hier lediglich die Wandung des ohnehin vorhandenen Turbinengehäuses genutzt wird. Damit lässt sich auf sehr einfache, jedoch nichts desto Trotz sehr effektive Weise ein sehr kompaktes Turbinengehäuse bereitstellen, welches als zusätzliche Funktionalität eine Bypasseinrichtung enthält.

Eine Turbine mit variabler Turbinengeometrie weist mehrere Turbinenschaufeln, einen fest mit dem Gehäuse verbundenen Leitgitterverstellring sowie eine Vielzahl verstellbarer Leitgitterschaufeln auf. Die Leitgitterschaufeln sind auf dem Leitgitterverstellring und radial um das Turbinenrad angeordnet und geben in Abhängigkeit von deren Stellung eine Strömungsrichtung und/oder einen effektiven Strömungseintrittsquerschnitt für den Abgasstrom vor. Der Aufbau und die Funktionsweise einer solchen VTG-Turbine ist vielfach bekannt und beispielsweise in den eingangs genannten Druckschriften, die hinsichtlich des Aufbaus und der Funktionsweise einer VTG-Turbine hiermit vollinhaltlich in die vorliegende Beschreibung der Erfindung miteinbezogen werden, beschrieben.

Die erfindungsgemäße Bypasseinrichtung ist als eine im Gehäuse durchgehende Ausnehmung bzw. Bohrung ausgebildet, deren eingangsseitige Öffnungen der Turbine vorgeschaltet angeordnet sind und deren ausgangsseitige Öffnungen der Turbine nachgeschaltet angeordnet sind.

Die durchgehenden Ausnehmungen bzw. Bohrungen sind in der Gehäusewand so integriert, dass deren eingangsseitige Öffnungen im Bereich der Leitgitterschaufeln angeordnet sind.

Die Ausnehmungen bzw. Bohrungen weisen vorzugsweise einen runden, ovalen oder annähernd runden Querschnitt auf. Dies stellt eine herstellungstechnisch sehr einfache und damit kostengünstige Möglichkeit dar, die Ausnehmungen bzw. Bohrungen in die Gehäusewand einzubringen.

In einer alternativen Ausgestaltung können die Öffnungen natürlich auch einen quadratischen, rechteckigen, dreieckigen oder hexagonalen Querschnitt aufweisen. Denkbar wären selbstverständlich auch beliebig anders ausgestaltete Querschnitte für die Ausnehmungen bzw. Bohrungen.

Die Leitgitterschaufeln des verstellbaren Leitgitters bilden vorzugsweise gleichzeitig die Verschließeinrichtung für den Bypass. Dadurch lassen sich die Turbinenleitschaufeln und der Bypass mit einer einzigen gemeinsamen Verstelleinrichtung, z.B. einer Unterdruckdose, regeln.

Die Verschließeinrichtung wird durch Verschlussdeckel gebildet, deren jeweiliger Deckelquerschnitt zumindest größer ist als der Querschnitt der entsprechenden Ausnehmungen bzw. Bohrungen im Bereich der eingangsseitigen Öffnungen. Die Verschlussdeckel sind vorteilhafterweise an den Leitgitterschaufeln angebracht und werden damit von diesen verstellt. Die Verschlussdeckel sowie die Stirnseite des Gehäuses, in dem die Öffnungen angeordnet sind, weisen vorteilhafterweise möglichst planare Oberflächen auf. Dadurch kann ein verstärkter Abrieb im Falle eines Kontaktes dieser Elemente weitestgehend vermieden werden.

Im geschlossenen Zustand können die Verschlussdeckel quasi selbstdichtend die entsprechenden Ausnehmungen bzw. Bohrungen, auf denen sie aufliegen, abdichten. Dabei erzeugt das einströmende Abgas einen Druck gegen die Verschlussdeckel und drückt diese somit auf die Öffnungen, wodurch die Öffnungen abgedichtet werden. Voraussetzung hierbei ist, dass die Gehäusestirnseite sowie die Verschlussdeckelvorderseite eine möglichst planare Oberfläche aufweisen und die Öffnungen vollständig geschlossen sind.

Eine weitere Aufgabe der Erfindung besteht darin, ein einfaches Verfahren zur Herstellung eines solchen Abgasturboladers bereitzustellen.

Die verfahrensbezogene Aufgabe wird erfindungsgemäß durch ein Herstellungsverfahren mit den Merkmalen des Patentanspruchs 15 gelöst.

Demgemäß ist ein Verfahren zur Herstellung einer Bypassbohrung mit Verschließeinrichtung und Verstelleinrichtung für einen Abgasturbolader vorgesehen, wobei sich die Bohrungen unter einem Winkel kleiner als 90° bezogen auf die Stirnfläche des Gehäuses, die im eingebauten Zustand gegenüber des Turbinenleitgitters angeordnet ist, erstrecken.

Die Stirnfläche des Gehäuses definiert sich hier als diejenige planare Fläche, die dem Leitgitterverstellring und den darauf angebrachten Leitgitterschaufeln gegenüberliegend angeordnet ist. Das Bohren der durchgehenden Bohrlöcher stellt die kostengünstigste und auch einfachste Methode zur Herstellung der durchgehenden Kanäle dar. Alternativ könnten die Kanäle beispielsweise auch bereits beim Gießen des Turbinengehäuses erzeugt werden. Es ergibt sich dann aber die Schwierigkeit, eine entsprechende Gehäusemaske bereitzustellen, mittels der die Kanäle mit den gewünschten Ausmaßen hergestellt werden kann. Dies wäre im Vergleich zum Bohren außerordentlich teuer und überdies nicht so präzise.

Die Stirnfläche, über die die Bypassbohrungen in das Gehäuse des Abgasturboladers gebohrt werden, muss einerseits sehr planar und glatt sein. Andererseits ist das aus Stahlguss bestehende Turbinengehäuse außerordentlich hart. Problematisch daran ist, einen geeigneten Punkt zum Ansetzen des Bohrers für die Bohrung zu finden. Erschwerend kommt hinzu, dass die Bohrung unter einem Winkel kleiner als 90° erfolgen soll, so dass der Bohrer sehr leicht aus seiner vorgesehenen Richtung abgelenkt wird.

Erfindungsgemäß wird daher vor der eigentlichen Bohrung eine punktuelle Ausnehmung im Turbinengehäuse eingebracht. Diese punktuelle Ausnehmung dient anschließend als Ansatzpunkt für den Bohrer. In einer vorteilhaften Ausgestaltung kann diese punktuelle Ausnehmung beispielsweise durch Laserschweißen erzeugt werden.

Bei der Herstellung einer nicht lösbaren Verbindung zwischen den Leitgitterschaufeln und der Verschlusseinrichtung ist darauf zu achten, dass ein Herstellungsverfahren hierfür verwendet wird, mittels dem die Geometrie der genannten Elemente möglichst nicht verändert wird. Insbesondere sollen diese Elemente nicht sehr heiß werden, da sonst Fehler entstehen können, beispielsweise können Mikrorisse entstehen oder die Leitgitterschaufeln können sich verziehen. Um dies zu verhindern werden die Leitgitterschaufeln und die Verschlusseinrichtung erfindungsgemäß mittels Laserschweißen aneinander befestigt. Dabei lassen sich die typischerweise aus einem gesinterten Stahlwerkstoff bestehenden Leitgitterschaufeln und Verschlussdeckel weitestgehend ohne eine Veränderung von deren Geometrie irreversibel miteinander verbinden.

Vorteilhafte Ausgestaltungen und Weiterbildungen der Erfindung sind den Unteransprüchen sowie der Beschreibung unter Bezugnahme auf die Zeichnung entnehmbar.

Die Erfindung wird nachfolgend anhand der in den Figuren der Zeichnung angegebenen Ausführungsbeispiele näher erläutert.
Es zeigt dabei:
- Figur 1: einen Meridianteilschnitt eines erfindungsgemäßen Abgasturboladers mit integrierten Bypassbohrungen;
- Figur 2: eine Draufsicht auf den Leitgitterverstellring und dahinter angeordneter Gehäusestirnseite mit Bypassbohrungen bei einem Abgasturbolader entsprechend Figur 1.

In den Figuren der Zeichnung sind gleiche bzw. funktionsgleiche Elemente - sofern nichts anderes angegeben ist - mit gleichen Bezugszeichen versehen worden.

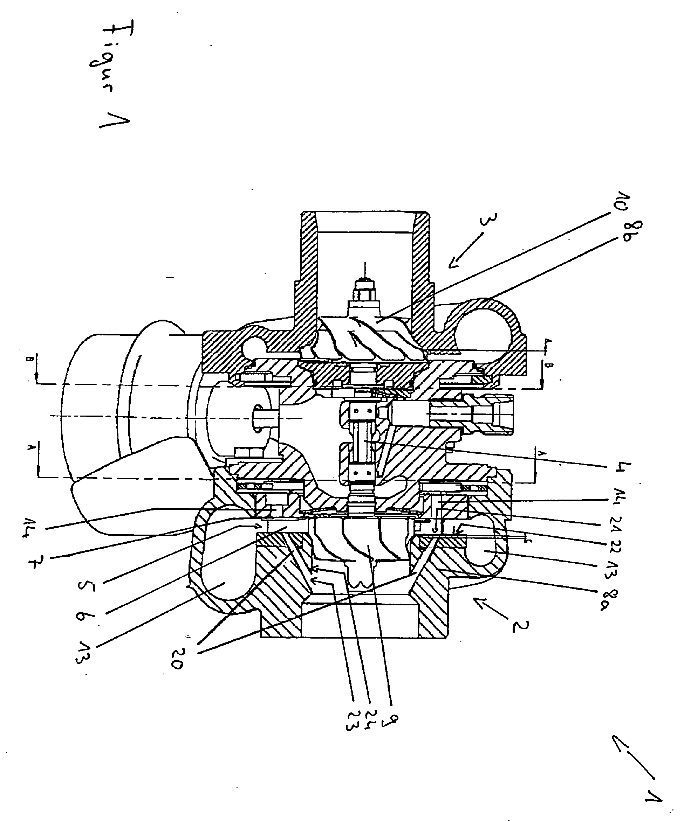

Figur 1 zeigt einen Meridianteilschnitt eines Abgasturboladers mit integrierten Bypassbohrungen. In Figur 1 ist mit Bezugszeichen 1 ein Abgasturbolader für eine Brennkraftmaschine bezeichnet, wobei die Brennkraftmaschine beispielsweise eine Dieselbrennkraftmaschine oder ein Ottomotor für ein Nutzfahrzeug oder einen PKW sein kann.

Der Abgasturbolader 1 enthält ein Gehäuse 8a, 8b. Im Gehäuse 8a, 8b des Abgasturbolader 1 ist eine Abgasturbine 2, die als Radialturbine 2 ausgeführt ist, sowie einen Verdichter 3 angeordnet. Das Verdichterrad 10 ist in einem Gehäuseabschnitt 8b für den Verdichter 3, das Turbinenrad 9 in einem Gehäuseabschnitt 8a für die Turbine 2 angeordnet. Das Turbinenrad 9 der Radialturbine 2 ist über eine gemeinsame Welle 4 drehfest mit einem Verdichterrad 10 des Verdichters 3 gekoppelt.

Weiterhin umfasst die Turbine 2 einen Strömungskanal 13, der das Turbinenrad 9 radial umschließt. Der Strömungskanal 13 weist im Bereich des Turbinenrades 9 einen radialen Strömungseintrittsquerschnitt auf, in dem ein radiales Leitgitter 5 angeordnet ist. Durch dieses verstellbare Leitgitter 5 erhält die Turbine 2 eine variable Turbinengeometrie. Das verstellbare Leitgitter 5 umfasst einen Leitgitterverstellring 27 sowie verstellbare Leitgitterschaufeln 6. Die Leitgitterschaufeln 6 sind an Wellen 14 in einem Leitschaufellagerring 7 drehbar gelagert.

Erfindungsgemäß weist nun das Turbinengehäuse 8a in der Gehäusewand angeordnete durchgehende Ausnehmungen 20 auf. Diese Ausnehmungen 20 sind so in der Gehäusewand 8a integriert, dass deren eingangsseitige Öffnungen 21 in einer Stirnseite 22 gebildet sind und deren ausgangsseitige Öffnungen 23 in einer zweiten Stirnseite 24 des Gehäuses 8b gebildet sind. Zumindest die erste Stirnseite 22 mit den ersten Öffnungen 21 ist möglichst planar. Die ersten Öffnungen 21 sind abgasseitig dem Turbineneinlass vorgeschaltet angeordnet, die zweiten Öffnungen 23 sind abgasseitig dem Turbinenauslass nachgeschaltet angeordnet. Die Ausnehmungen 20 überbrücken somit das Turbinenrad 9, so dass zumindest ein Teil des Abgases statt über das Turbinenrad 9 über die Ausnehmungen 20 strömen kann.

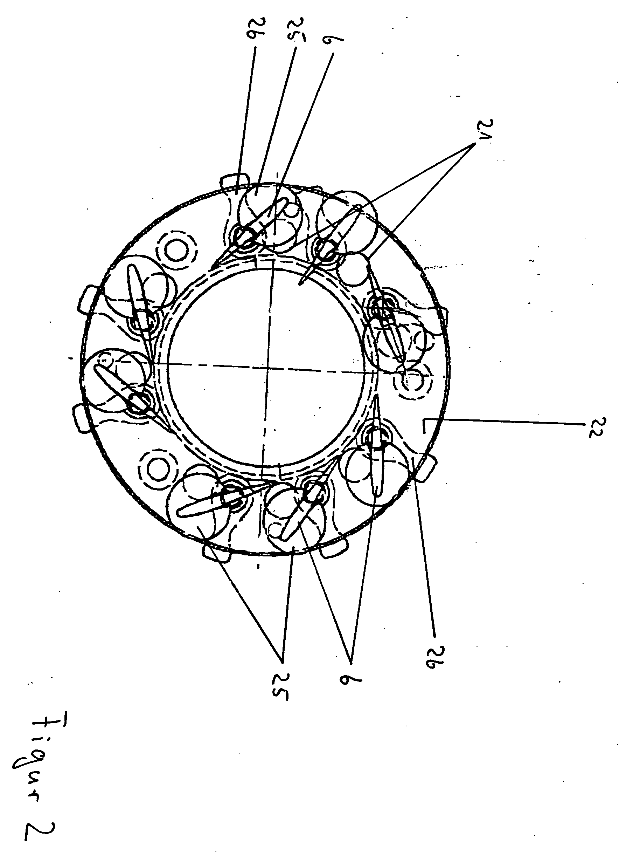

An den verstellbaren Leitgitterschaufeln 6 sind Verschlussdeckel 25 (siehe Figur 2) so angebracht, dass diese bei einer Bewegung der Leitgitterschaufeln 6 über die Stirnseite 22 bewegbar sind. Gleichzeitig sind auch die Öffnungen 21 im Bereich der Leitgitterschaufeln 6 angeordnet. Damit lassen sich durch eine Bewegung der Leitgitterschaufeln 6 die Öffnungen 21 öffnen, schließen oder teilweise schließen.

Wie Figur 2 zeigt, weisen die Ausnehmungen 20 bzw. die Öffnungen 21 einen etwa runden Querschnitt auf. Auch die Verschlussdeckel 25 weisen eine etwa runde Oberfläche auf, wobei die Oberfläche der Verschlussdeckel 25 größer ist als der Querschnitt der Öffnungen 21.

Ferner sind Distanzstücke 26 vorgesehen, die bei einer Bewegung der Leitgitterschaufeln 6 und damit der Verschlussdeckel 25 ein Klemmen an der Stirnfläche 22 verhindern.

Nachfolgend wird eine bevorzugte Betriebsweise des Turboladers 1 bzw. der Turbine 2 mit variabler Turbinengeometrie anhand eines Beispiels kurz erläutert.

Das Turbinenrad 9, das von unter Überdruck stehenden Abgasen in der Brennkraftmaschine angetrieben wird, treibt über die gemeinsame Welle 4 seinerseits das Verdichterrad 10 des Abgasturboladers 1 an. Im Betrieb der Brennkraftmaschine wird Abgas des Motors in einen Strömungskanal 13 der Radialturbine 2 geleitet und dem Turbinenrad 9 zugeführt. Dessen Drehbewegung wird über die gemeinsame Welle 4 auf das Verdichterrad 10 übertragen, woraufhin im Verdichter 3 angesaugte Ladeluft auf einen erhöhten Ladedruck verdichtet und dem Zylindereinlass des Motors zugeführt wird.

Zur Veränderung des Strömungseintrittsquerschnitt weist der Abgasturbolader 1 im Bereich der Turbine 2 ein Leitgitter 5 mit verstellbaren Leitgitterschaufeln 6 auf, über die der Strömungseintrittsquerschnitt variiert werden kann. Je nach Betriebsweise der Brennkraftmaschine kann die variable Turbinengeometrie des Leitgitters 5 durch ein ihr zugeordnetes Stellelement in ihrer jeweiligen Position verstellt werden. Dieses Leitgitter 5 ist im Einströmbereich der Turbine 2 angeordnet und ermöglicht eine variable Anströmung des Turbinenrades 9. Über die Einstellung des Leitgitters 5 kann der Abgasgegendruck und auch die Art und Weise der Zuströmung des Abgases auf das Turbinenrad 9 beeinflusst werden, wodurch die Leistung der Turbine 2 und die Leistung des Verdichters 3 je nach Bedarf und Betriebszustand der Brennkraftmaschine eingestellt werden können.

Die drehbar gelagerten Leitgitterschaufeln 6 zwischen dem Gehäuse 8a und dem Turbinenrad 9 verändern das Aufstauverhalten und damit die Leistung der Turbine 2. Bei niedrigen Motordrehzahlen wird der effektive Strömungseintrittsquerschnitt der Turbine 2 durch Schließen der Leitgitterschaufeln 6 verkleinert. Bei hohen Motordrehzahlen öffnet man die Leitgitterschaufeln 6.

Während der Fahrzeugbeschleunigung aus niedrigen Motordrehzahlen werden die Leitgitterschaufeln 6 nahezu geschlossen. In diesem Betriebszustand strömt das vom Motor erzeugte Abgas vollständig über das Turbinenrad 9. Bei einer Steigerung der Motordrehzahl wird ein Punkt erreicht, bei welchem selbst bei vollständig geöffneten Turbinenschaufeln das maximale Schluckvermögen des Turbinengehäuses erreicht ist. Ohne einen Bypass würde der Abgasgegendruck in unzulässiger Weise ansteigen. Wird die Motordrehzahl noch weiter erhöht, werden durch die Öffnungsbewegung der Leitgitterschaufeln 6 und der daran angebrachten Verschlussdeckel 25 zusätzlich auch die Öffnungen 21 der Ausnehmungen 20 geöffnet. Dadurch wird Abgas über die als Bypass fungierenden Ausnehmungen 20 von dem Turbinenrad 9 weggeleitet und der Abgasgegendruck wird begrenzt.

Die Ansteuerung der Leitgitterschaufeln 6 erfolgt meist elektronisch mit Unterdrucksteuerdosen und Taktventilen, jedoch sind hier auch elektrische Aktuatoren mit Positionsrückmeldung, die eine exakte und äußerst flexible Regelung des Ladedruckes ermöglichen, denkbar.

Zusammenfassend kann festgestellt werden, dass durch den erfindungsgemäßen Turbolader mit in der Gehäusewand integrierter Bypasseinrichtung auf sehr einfache, jedoch nichts desto Trotz sehr effektive Weise ein sehr kompaktes Turboladergehäuse bereitgestellt werden kann, ohne dass eine konstruktiv aufwendige, teuere Lösung gemäß dem Stand der Technik in Kauf genommen werden muss.

Die vorliegende Erfindung wurde anhand der vorstehenden Beschreibung so dargestellt, um das Prinzip der Erfindung und dessen praktische Anwendung bestmöglichst zu erklären, jedoch lässt sich die erfindungsgemäße Anordnung bei geeigneter Abwandlung selbstverständlich in mannigfaltigen anderen Ausführungsformen realisieren.

### Bezugszeichenliste

- 1: Abgasturbolader
- 2: Turbine, Radialturbine
- 3: Verdichter
- 4: gemeinsame Welle
- 5: (radiales) Leitgitter
- 6: Leitgitterschaufeln
- 27: Leitgitterverstellring
- 8a: Turbinengehäuse, Gehäusewand
- 8b: Verdichtergehäuse
- 9: Turbinenrad
- 10: Verdichterrad
- 13: Strömungskanal (Turbine)
- 14: Wellen der Leitgitterschaufeln

- 20: Ausnehmungen, Bohrungen
- 21: (erste) Öffnungen
- 22: Stirnfläche, Stirnseite
- 23: (zweite) Öffnungen
- 24: Stirnseite
- 25: Verschlussdeckel
- 26: Distanzstücke
- 7: Schaufellagerring

## Patentansprüche

1. Abgasturbolader (1) für eine Brennkraftmaschine
- mit einem Gehäuse (8a, 8b),
- mit mindestens einer Turbine (2), die in dem Gehäuse (8a) angeordnet ist und die eine variable Turbinengeometrie zur Regelung des Ladeluftdruckes aufweist,
- mit einer Bypasseinrichtung (20, 21, 22) für den Abgasstrom zur zumindest teilweisen Überbrückung der Turbine (2) ,
**dadurch gekennzeichnet,**
**dass** die Bypasseinrichtung (20, 21, 22) in das Gehäuse (8a) integriert ist.

2. Abgasturbolader nach Anspruch 1,
**dadurch gekennzeichnet,**
**dass** die Bypasseinrichtung (20, 21, 22) in einer Gehäusewand (8a), insbesondere im Bereich der Turbine (2), integriert ist.

3. Abgasturbolader einem der vorstehenden Ansprüche,
**dadurch gekennzeichnet,**
**dass** die Turbine (2) mit variabler Turbinengeometrie zumindest folgende Merkmale enthält:
- ein Turbinenrad (9),
- ein mit dem Gehäuse (8a) verbundener Leitgitterverstellring (7),
- eine Vielzahl verstellbarer Leitgitterschaufeln (6), die auf dem Leitgitterverstellring (7) und radial um das Turbinenrad (9) angeordnet sind, die in Abhängigkeit von deren Stellung eine Strömungsrichtung und/oder einen effektiven Strömungseintrittsquerschnitt für den Abgasstrom vorgeben.

4. Abgasturbolader nach einem der vorstehenden Ansprüche,
**dadurch gekennzeichnet,**
**dass** die Bypasseinrichtung (20, 21, 22) als im Gehäuse (8a) durchgehende Ausnehmungen (20) ausgebildet ist, deren eingangsseitige Öffnungen (21) der Turbine (2) vorgeschaltet angeordnet sind und deren ausgangsseitige Öffnungen (23) der Turbine (2) nachgeschaltet angeordnet sind.

5. Abgasturbolader nach Anspruch 4,
**dadurch gekennzeichnet,**
**dass** die Ausnehmungen (20) so in die Gehäusewand (8a) integriert sind, dass deren eingangsseitige Öffnungen (21) im Bereich der Leitgitterschaufeln (6) angeordnet sind.

6. Abgasturbolader nach einem der Ansprüche 4 oder 5,
**dadurch gekennzeichnet,**
**dass** die Ausnehmungen (20) als Bohrungen (20) mit rundem, ovalen oder annähernd rundem Querschnitt ausgebildet sind.

7. Abgasturbolader nach einem der Ansprüche 4 bis 6,
**dadurch gekennzeichnet,**
**dass** die Ausnehmungen (20) einen quadratischen, rechteckigen, dreieckigen oder hexagonalen Querschnitt aufweisen.

8. Abgasturbolader nach einem der vorstehenden Ansprüche,
**dadurch gekennzeichnet,**
**dass** zumindest eine Verschließeinrichtung (25) und zumindest eine Verstelleinrichtung (7, 6, 27, 14) vorgesehen sind, wobei die Verschließeinrichtungen (25) sich mittels der Verstelleinrichtungen (7, 6, 27, 14) ganz oder teilweise über die eingangsseitigen Öffnungen (21) bewegen lassen.

9. Abgasturbolader nach Anspruch 8,
**dadurch gekennzeichnet,**
**dass** die Verstelleinrichtungen (7, 6, 27, 14) durch die Leitgitterschaufeln (6) gebildet sind.

10. Abgasturbolader nach einem der Ansprüche 8 oder 9,
**dadurch gekennzeichnet,**
**dass** die Verschließeinrichtungen (25) durch Verschlussdeckel (25) gebildet sind, deren Deckelquerschnitte zumindest größer sind als die Querschnitte der entsprechenden Ausnehmungen (20) im Bereich der eingangsseitigen Öffnungen (21).

11. Abgasturbolader nach einem der Ansprüche 8 bis 10,
**dadurch gekennzeichnet,**
**dass** sowohl die Verschließeinrichtungen (25) als auch die Verstelleinrichtungen (7, 6, 27, 14) durch die Leitgitterschaufeln (6) gebildet sind, wobei der Querschnitt einer Leitgitterschaufel (6) im geschlossenen Zustand und im Bereich einer eingangsseitigen Öffnung (21) zumindest größer ist als der Querschnitt einer Ausnehmung (20) in diesem Bereich.

12. Abgasturbolader nach einem der Ansprüche 8 bis 11,
**dadurch gekennzeichnet,**
**dass** die Verschließeinrichtungen (25) im geschlossenen Zustand selbstdichtend auf den entsprechenden Öffnungen (21) aufliegen und diese abdichten.

13. Abgasturbolader nach einem der Ansprüche 8 bis 12,
**dadurch gekennzeichnet,**
**dass** Distanzstücke (26) vorgesehen sind, die zwischen einer Stirnfläche (22), in der die Öffnungen (21) angeordnet sind, und den Verschließeinrichtungen (7, 6, 27, 14) angeordnet sind und die einen direkten Kontakt dieser Elemente verhindern.

14. Verfahren zur Herstellung von Ausnehmungen (20) mit Verschließeinrichtungen (25) und Verstelleinrichtungen (7, 6, 27, 14) für einen Abgasturbolader (1), insbesondere nach einem der vorstehenden Ansprüche,
**dadurch gekennzeichnet,**
**dass** die Ausnehmungen (20) durch Bohren in das Gehäuse (8a) des Turboladers (1) hergestellt werden, wobei das Bohren unter einem Winkel kleiner als 90° bezogen auf eine Stirnfläche (22) des Gehäuses (8a), die im eingebauten Zustand einem Leitgitter (5) gegenüber liegend angeordnet ist, erfolgt.

15. Verfahren nach Anspruch 14,
**dadurch gekennzeichnet,**
**dass** vor dem Bohren punktuelle Ausnehmungen, die als Ansatz für den Bohrer dienen, im Gehäuse (8a) des Turboladers (1), beispielsweise durch Laserschweißen, erzeugt wird.

16. Verfahren nach einem der Ansprüche 14 oder 15,
**dadurch gekennzeichnet,**
**dass** eine Verschlusseinrichtung (25) auf eine entsprechende Leitgitterschaufel (6) mittels Laserschweißen, insbesondere mittels Induktionsschweißen, befestigt wird.
